# EUROPÄISCHE PATENTSCHRIFT

(11) **EP 3 882 074 B1**
(45) Veröffentlichungstag und Bekanntmachung des Hinweises auf die Patenterteilung: **23.08.2023**
(21) Anmeldenummer: 21158787.8
(22) Anmeldetag: 23.02.2021
(51) Int. Cl.: B60N 2/58, D05B 1/24, B68G 7/00

(54) **VERFAHREN ZUM EINBRINGEN EINER ANZAHL VERTIEFUNGEN IN EINEN SITZBEZUG FÜR EINEN KRAFTFAHRZEUGSITZ**
METHOD FOR INTRODUCING A NUMBER OF RECESSES INTO A SEAT COVER FOR A MOTOR VEHICLE SEAT
PROCÉDÉ DE RÉALISATION D'UN CERTAIN NOMBRE DE CAVITÉS DANS UNE HOUSSE POUR SIÈGE DE VÉHICULE AUTOMOBILE

(30) Priorität: 19.03.2020 DE 102020203567
(43) Veröffentlichungstag der Anmeldung: 22.09.2021
(73) Patentinhaber: Magna Seating (Germany) GmbH, 63877 Sailauf (DE)
(72) Erfinder: HAAS, Hansjörg, 63589 Linsengericht (DE); BREHM, Christoph, 64807 Dieburg (DE)
(74) Vertreter: Reuter, Silke Beatrix

(56) Entgegenhaltungen:
- DE-A1-102017 126 141
- US-A- 3 468 275
- US-B2- 10 315 383

## Beschreibung

Die vorliegende Erfindung betrifft ein Verfahren zum Einbringen einer Anzahl Vertiefungen in einen Sitzbezug für einen Kraftfahrzeugsitz.

Kraftfahrzeugsitze bestehen im Wesentlichen aus einer ersten mit dem Fahrzeugboden verbundenen Tragstruktur die eine Sitzfläche mit Sitzpolster aufweist sowie einer an der ersten Tragstruktur angebundenen eine Rückenlehne bildenden zweiten Tragstruktur mit einem Rückenlehnenpolster. Sitzfläche und Rückenlehne sind dabei mit einem Sitzbezug überzogen der entsprechend der Kontur der Polsterung angepasst ausgeführt ist. Der Sitzbezug besteht üblicherweise aus einem Oberflächenmaterial sowie einem Trägermaterial, die in einem Kaschierverfahren einstückig miteinander verbunden sind (Kaschierung).

Um den Kraftfahrzeugsitz optisch ansprechend zu gestalten, werden sowohl die Sitzfläche als auch die Rückenlehne mit sogenannten lokalen Vertiefungen ausgeführt. Diese lokalen Vertiefungen schließen sogenannte funktionale Vertiefungen als auch designspezifische Vertiefungen ein. Die Vertiefungen bilden dabei eine dreidimensionale Optik beispielsweise in Form eines gleichmäßigen Musters oder in Form von Linien oder Wellen oder Zacken oder anderen geometrischen Formen.

Funktionalen Vertiefungen entstehen durch die Befestigung des Sitzbezugs an den Tragstrukturen und sind notwendig, damit der Sitzbezug der Oberflächenkontur des abzudeckenden darunter liegenden Polsters folgen kann.

Designspezifische Vertiefungen werden durch ein Einbringen von Mustern erreicht. Hierfür wird das Bezugsmaterial, welches zur Herstellung des Sitzbezugs verwendet wird, üblicherweise abgesteppt. Hierbei bleibt die Steppnaht auf der Sichtseite des Bezugsmaterials sichtbar, da der Steppstich durch vertikales Durchstechen des Bezugsmaterial erzeugt wird. In der Serienfertigung wird die Herstellung eines derartigen designspezifischen Musters automatisiert durch Nähautomaten erzeugt.

Ein mittels eines Steppverfahrens hergestellter Sitzbezug, der ein dreidimensionales Aussehen hat, ist aus der EP 3 100 905 A1 bekannt.

Aus der DE 10 2017 126 141 A1 ist einen Sitzbezug für einen Fahrzeugsitz sowie ein Verfahren zur Herstellung des Sitzbezugs bekannt. Der Sitzbezug weist eine zumindest zweilagige Verbundstruktur aus einer dekorseitigen Oberseitenlage und einer mit dem Fahrzeugsitz in Anlage bringbaren Unterseitenlage auf. Weiterhin ist an der Unterseitenlage ein insbesondere als Bezugsabheftung ausgebildetes Funktionsteil angeordnet. Das Funktionsteil ist durch eine dekorseitig nicht sichtbare Blindstichnaht mit der Unterseitenlage verbunden.

Das Dokument US 2017 / 0 028 937 A1 offenbart einen Fahrzeugsitz mit einem dreidimensional gestalteten Sitzbezug, wobei als Bezugsmaterial für das Sitzpolster und die Rückenlehne ein Stoff verwendet wird, der aus drei Lagen Hautmaterial, Watte als Polstermaterial und Rückengrundgewebe besteht. Als Material der Watte wird z.B. ein Urethanmaterial mit hoher Polstereigenschaft verwendet. Dementsprechend ist es möglich, die konvex-konkave Unregelmä-ßigkeit des Bezuges hervorzuheben und die Designeigenschaft und den Sitzkomfort zu verbessern, indem man den Sitzbezug mit Steppnähten versieht oder den Sitzbezug durch Zusammenfügen mehrerer Teile herstellt.

Des Weiteren können designspezifische Vertiefungen durch Prägeverfahren erzeugt werden. Bei Sitzbezügen aus einem Kunststoffmaterial können mittels Ultraschallschweißen mit einem Stempel und bei Sitzbezügen aus Lederhäuten können Prägeverfahren mit einem temperierten Stempel genutzt werden.

Ein derartiges Prägeverfahren zur Herstellung eines Sitzbezugs, bei dem Muster von eingezogenen Kerben auf der Oberfläche des Sitzbezugs gebildet werden, ist aus der DE 43 13 759 A1 bekannt.

Unterbrochen werden diese Muster bei einem fertig montierten Kraftfahrzeugsitz meist durch funktionale Vertiefungen.

Insgesamt wird durch die Vertiefungen ein dreidimensionaler Effekt des Sitzbezugs erzeugt, der wie obenstehend bereits erörtert, bewusst zur optischen Gestaltung eingesetzt wird.

Hierbei ist die Dicke des Sitzbezugs bzw. der Kaschierung entscheidend für die Tiefe der Vertiefung und somit auch für den dreidimensionalen Effekt. Beim Erzeugen von designspezifischen Vertiefungen mittels des Steppverfahrens kann nur ca. die Hälfte der Dicke des kaschierten Sitzbezugs ausgenutzt werden. Dies ist dadurch bedingt, dass beim Absteppen die Vorder- und Rückseite des kaschierten Bezugsmaterials gleichermaßen zusammengezogen werden. Es entsteht sowohl auf der Sichtseite des fertiggestellten Sitzbezugs als auch auf der Rückseite des Sitzbezugs eine Vertiefung sowie eine beidseits sichtbare Naht. Beim Absteppen muss daher häufig zur Erzielung eines ausreichenden 3D Effektes eine weitere Unterfütterung oder Zwischenschicht verwendet werden, was mit einem hohen Kosten und Zeitaufwand verbunden ist.

Beim zuvor genannten Prägeverfahren zur Erzielung von Vertiefungen in dem Sitzbezug entsteht durch thermischen Eintrag in das Bezugsmaterial eine unerwünschte optische Beeinträchtigung der Oberflächen auf der Sichtseite. Zudem ist der Prägeprozess abhängig von dem eingesetzten Obermaterial des Sitzbezugs und nur begrenzt anwendbar bei Kunstleder, Mikrofaser (Alcantara) und Lederhäuten.

Es ist eine Aufgabe der vorliegenden Erfindung, ein Verfahren zur Einbringung einer Anzahl von Vertiefungen in einen Sitzbezugs für einen Kraftfahrzeugsitz derart weiterzubilden, dass dieses einfach durchführbar und kostengünstig ist und einen Sitzbezug mit einer optisch ansprechenden dreidimensionalen Gestaltung erzielt.

Diese Aufgabe löst die vorliegende Erfindung durch die im Anspruch 1 angegebenen Merkmale.

Das grundsätzlich bekannte Blindstichnähverfahren mittels einer Blindstichnähmaschine wird üblicherweise dafür verwendet, um nicht sichtbar auf der Sichtseite auf der Rückseite eines Flächenmaterials eine Naht einzubringen. Mittels einer derartigen Blindstichnaht werden bei einem Sitzbezug in bekannter Weise Funktionselemente wie z.B. Abheftelemente zum Abheften/Befestigen des Sitzbezugs an der Sitzstruktur befestigt. Hierbei ist die Befestigung/Anbringung des Funktionselements an der Rückseite des Sitzbezugs von der Sichtseite her für eine Nutzer nicht sichtbar.

Bei dem erfindungsgemäßen Verfahren wird allerdings im Gegensatz hierzu ein Blindstichnähverfahren eingesetzt, um gezielt eine Vertiefung auf der Sichtseite des Sitzbezugs einzubringen.

Vorteilhafterweise wird mittels des erfindungsgemäßen Verfahrens ein dreidimensionaler Effekt durch das Einbringen von Vertiefungen erreicht, wobei auf der Sichtseite keine Nähte zu sehen sind.

Im Gegensatz zu dem bekannten Steppverfahren mittels einer Steppstichnähmaschine zur Herstellung von einer Anzahl Vertiefungen in dem Sitzbezug und zur Erzielung eines dreidimensionalen Effekts bewegt sich die Blindstichnadel nicht in reiner vertikaler Richtung und durchsticht den kompletten Sitzbezug d.h. die Kaschierung und die Sitzaußenhaut, sondern bogenförmig und durchdringt nur die Kaschierung.

Durch das Komprimieren der Kaschierung ohne ein Eindringen der Blindstichnadel in dem Sitzbezug, entsteht auf dem gegenüberliegenden sichtseitigen Oberflächenbereich des Sitzbezugs eine Überlänge. Hierdurch bildet sich die gewünschte Vertiefung.

Da der rückwärtige Oberflächenbereich durch das erfindungsgemäße Verfahren im Bereich der Vertiefung kleiner geworden ist, kann bei der Fertigstellung und Montage des Kraftfahrzeugsitzes der Sitzbezug gespannt werden, ohne dass der dreidimensionale Effekt verloren geht.

Durch das erfindungsgemäße Verfahren ist eine vielfältige Musterbildung auf der Sichtseite des Sitzbezugs möglich, ohne dass auf der Sichtseite Nähte zu sehen sind.

Ein dreidimensionaler Effekt wird erzielt, wobei hierdurch kaum ein Verlust der Höhe der Kaschierung erfolgt. Hierdurch kann Material und Herstellkosten eingespart werden.

Das Blindstichnähverfahren kann mit einer üblichen Einstellung der Stichlänge, Stichtiefe und der Fadenspannung weiterhin dazu genutzt werden, um nicht sichtbare Funktionsteile wie Abheftungen anzubringen.

Das Verfahren ist für die Serienproduktion geeignet, da ein Nähautomat mit einem System für Blindstichnähverfahren ausgerüstet werden kann.

Weiterhin vorteilhaft ist die Vertiefung widerstandsfähiger gegen Zugkräfte in der horizontalen Ebene. Dies ist darauf zurückzuführen, dass der Nähfaden über einen Großteil in der horizontalen Ebenen verläuft und somit in Richtung des Zugs Kraft aufnehmen kann. Somit sind die Vertiefungen beständiger gegen Krümmungen der Sitzoberfläche, da ein Sitzbezug unter anderem durch Zug in die dreidimensionale Form zur Anpassung an eine Sitzkontur gebracht wird. Demnach können die Vertiefungen auch über Seitenwangen angewendet werden.

Insbesondere vorteilhaft ist, dass die Anzahl Vertiefungen besser sichtbar sind, da mit dem erfindungsgemäßen Verfahren ein besserer optischer dreidimensionaler Effekt unter Ausnutzung der gesamten Kaschierhöhe erreicht wird.

Die Vertikale Richtung in Bezug auf den Sitzbezug ist in den Figuren mit dem Pfeil Pf1, die horizontale Richtung ist mit dem Pfeil Pf2 angezeigt.

Die Rückseite des Sitzbezugs ist mit R, die Vorderseite bzw. Sichtseite mit V gekennzeichnet.

Vorteilhafte Ausgestaltungen der vorliegenden Erfindung sind in den jeweiligen Unteransprüchen angegeben.

Bevorzugte Ausführungsformen der vorliegenden Erfindung werden nachfolgend beispielshalber beschrieben, wobei auf die anhängenden Zeichnungen Bezug genommen wird. Darin zeigen:
- Fig. 1: eine Ansicht auf eine Rückenlehne eines Kraftfahrzeugsitzes,
- Fig.2: einen Querschnitt durch den Sitzbezug in einem ersten Verfahrensschritt bei der Einbringung einer Vertiefung,
- Fig. 3: einen Querschnitt durch den Sitzbezug in einem zweiten Verfahrensschritt; und
- Fig. 4: einen Querschnitt durch den Sitzbezug mit eingebrachter Vertiefung gemäß dem erfindungsgemäßen Verfahren.

Ein üblicher Kraftfahrzeugsitz für ein Kraftfahrzeug umfasst eine erste Tragstruktur mit einer daran angeordneten Rückenlehne 1 mit einem Rückenlehnenpolster, ein die Sitzfläche bildendes Sitzpolster und einer zugeordneten zweiten Tragstruktur sowie einer Bodenabstützung. Das Rückenlehnenpolster sowie das Sitzpolster umfassen im Wesentlichen eine Polsterung aus einem Schaummaterial und sind mit einem Sitzbezug 2 überzogen. Als Sitzbezug 2 können unterschiedliche Materialien als Stoffbezüge, Kunststoffmaterialien oder auch Leder verwendet werden.

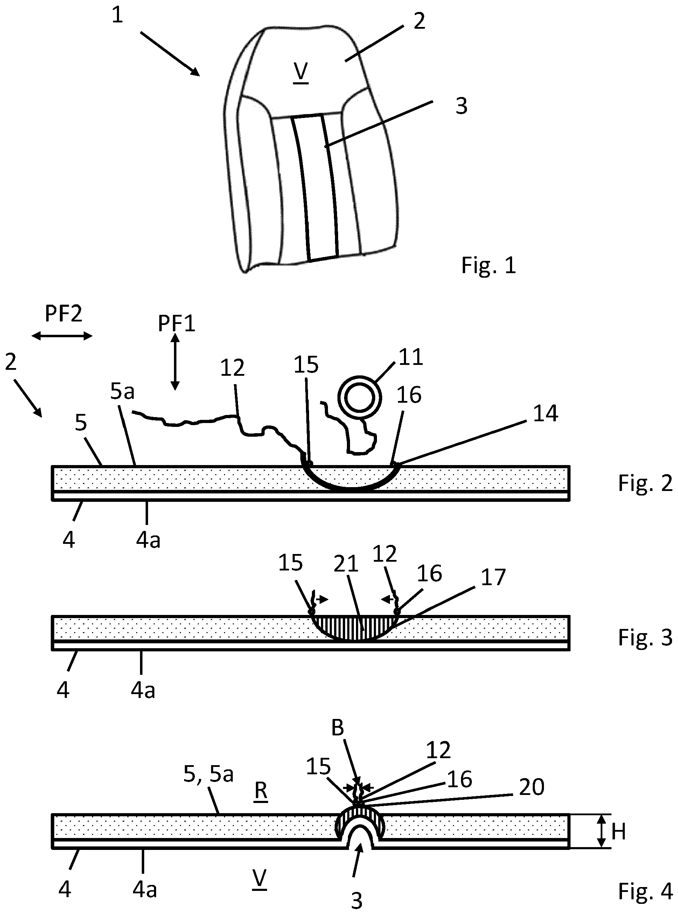

Figur 1 zeigt in einer perspektivischen Darstellung beispielhaft die Rückenlehne 1 mit Sitzbezug 2, wobei in den Sitzbezug eine Anzahl von Vertiefungen 3 eingebracht sind. Die beispielhaft dargestellten Vertiefungen 3 sind linienförmig ausgeführt. Wie bereits ausgeführt, können die Vertiefungen 3 ein beliebiges dreidimensionales Muster ausbilden. Aufgrund der Vertiefungen 3 wird ein dreidimensionaler Effekt des Rückenlehnenpolsters erreicht, wobei keine Naht/Nahtverlauf von der Sichtseite V her sichtbar ist.

Anhand der Figuren 2, 3 und 4 wird nachfolgend das erfindungsgemäße Verfahren zur Herstellung des Sitzbezugs 2 mit eingebrachten Vertiefungen 3 beschrieben.

Der Sitzbezug 2 ist als Verbundmaterial ausgeführt und in einem Kaschierverfahren hergestellt. Er umfasst eine Sitzaußenhaut 4 mit einem Oberflächenbereich 4a, sowie eine Kaschierung 5 auf dem abgewandten Oberflächenbereich 4a der Sitzaußenhaut 4. Der Oberflächenbereich 4a der Sitzaußenhaut 4 bildet dabei die Seite, die bei einem Kraftfahrzeugsitz für den Nutzer sichtbar (Sichtseite V) ist. Die Kaschierung 5 weist einen rückwärtigen Oberflächenbereich 5a auf.

Die Sitzaußenhaut 4 kann beispielsweise aus einem Ledermaterial, Textilstoff, Kunstleder, Mikrofaser bestehen, während die Kaschierung 5 ein textiles Flächengebilde umfassen kann. Die Kaschierung 5 kann auch mehrschichtig ausgeführt sein und eine geschäumte Polsterschicht umfassen. Die Kaschierung 5 hat eine Kaschierhöhe die mit H gekennzeichnet ist.

In der Figur 2 ist das Blindstichnähverfahren zur Herstellung einer Vertiefung in dem Sitzbezug 2 in einem ersten Schritt gezeigt.

Zunächst wird der Sitzbezug 2 bereitgestellt. Des Weiteren ist eine Blindstich-Steppstich Nähmaschine zur Durchführung des erfindungsgemäßen Verfahrens bereitgestellt. Schematisch dargestellt ist eine Spule 11 einer Blindstichnähmaschine, die den Nähfaden 12 bevorratet. Des Weiteren ersichtlich ist eine Blindstichnadel 14 beim Nähvorgang mit markiertem Einstich 15 der Blindstichnadel 14 und Ausstich 16 der Blindstichnadel 14. Aus der Schnittdarstellung der Figur 2 kann man erkennen, dass die Blindstichnadel 14 gebogen ausgeführt ist und der Fadenverlauf 17 zwischen Einstich 15 und Ausstich 16 dementsprechend gekrümmt in der Kaschierung 5 verläuft. Beim Nähvorgang durchtritt die Blindstichnadel 14 die Sitzaußenhaut 4 nicht.

In der Figur 3 ist der Fadenverlauf 17 der in dem zuvor beschriebenen Verfahrensschritt erzeugten Blindstichnaht 20 gezeigt. Der grau hinterlegte / schattierte Bereich entspricht dabei dem zu komprimierenden Bereich 21 der Kaschierung 5 der zwischen dem Fadenverlauf 17 und dem rückwärtigen Oberflächenbereich 5a liegt.

Beim Erzeugen der Blindstichnaht 20 dringt die gebogene Blindstichnadel 14 beim Nähvorgang nicht in die Sitzaußenhaut 2. Der Nähfaden 12 wird mittels der Blindstichnadel 14 derart durch die Kaschierung 5 geführt, dass der Nähfaden 12 an einem Einstich 15 in den rückseitigen Oberflächenbereich 5a ein- und an dem horizontal beabstandet angeordneten Ausstich 16 austritt. Zwischen Einstich und Ausstich wird dabei der dazwischenliegende gekrümmte Fadenverlauf 17 erzeugt. Durch entsprechende Einstellung der Stichtiefe, der Stichlänge und einer erhöhten Fadenspannung der Blindstichnähmaschine wird beim Erzeugen der Blindstichnaht der Einstich 15 und der Ausstich 16 auf einen gemeinsamen Bereich B in horizontaler Richtung zusammengezogen werden und der Materialbereich der Kaschierung der sich zwischen Ein- und Ausstich des Fadenverlaufs 17 befindet hierdurch komprimiert. Auf dem Bereich B gegenüberliegenden Oberflächenbereich 4a der Sitzaußenhaut 4 bildet sich hierdurch eine Vertiefung 3. Dies wird dadurch erreicht, da der Fadenverlauf 17 der Naht nur in der Kaschierung 5 verläuft und das Komprimieren der Kaschierung 5 im entsprechenden gegenüberliegenden Bereich der Sitzaußenhaut 4 eine Überlänge erzeugt. Diese Situation ist in der Figur 4 dargestellt.

Aus der Darstellung der Figur 4 kann man erkennen, dass sich nach dem Herstellen der Blindstichnaht der rückwärtige Oberflächenbereich 5a weiterhin horizontal, plan - auch im Bereich B verläuft.

Durch geeigneten Nähverlauf lassen sich hierdurch beliebige Muster in einer dreidimensionalen Optik herstellen.

### Bezugszeichenliste

- 1: Rückenlehne
- 2: Sitzbezug
- 3: Vertiefungen
- 4: Sitzaußenhaut
- 4a: Oberflächenbereich
- 5: Kaschierung
- 5a: Oberflächenbereich
- 11: Spule
- 12: Nähfaden
- 14: Blindstichnadel
- 15: Einstich
- 16: Ausstich
- 17: Fadenverlauf
- 20: Blindstichnaht
- 21: zu komprimierender Bereich

## Patentansprüche

1. Verfahren zum Einbringen einer Anzahl Vertiefungen (3) in einen Sitzbezug (2) für einen Kraftfahrzeugsitz mit den nachfolgenden Schritten:
- Bereitstellen eines Sitzbezugs (2) aus einem zumindest zweilagigen Verbundmaterial, welches eine Sitzaußenhaut (4) mit einem Oberflächenbereich (4a) auf einer Sichtseite und einer Kaschierung (5) mit einem rückseitigen Oberflächenbereich (5a) umfasst
- Bereitstellen einer Blindstich-Steppstich Nähmaschine mit einem Nähfaden (12) und einer gebogenen Blindstichnadel (14) zur Herstellung einer Blindstichnaht (20)
- Erzeugen einer Blindstichnaht (20), wobei die gebogenen Blindstichnadel (14) beim Nähvorgang die Sitzaußenhaut (4) nicht durchdringt und der Nähfaden (12) mittels der Blindstichnadel (14) durch die Kaschierung (5) derart geführt wird, dass beim Nähen der Nähfaden (12) an einem Einstich (15) in den rückseitigen Oberflächenbereich (5a) ein und an einem horizontal beabstandet angeordneten Ausstich (16) austritt,
**dadurch gekennzeichnet,**
- **dass** zwischen Einstich (15) und Ausstich (16) ein dazwischenliegender gekrümmter Fadenverlauf (17) erzeugt wird, und dass die Stichtiefe, die Stichlänge und die Fadenspannung der Blindstichnähmaschine derart eingestellt sind, dass beim Erzeugen der Blindstichnaht (20) der Einstich (15) und der Ausstich (16) auf einen gemeinsamen Bereich B zusammengezogen werden und der Materialbereich (21) der Kaschierung (5) der sich zwischen Ein- und Ausstich des Fadenverlaufs (17) befindet hierdurch komprimiert wird, wodurch sich auf der dem Bereich B gegenüberliegenden Oberflächenbereich (4a) der Sitzaußenhaut (4) eine Vertiefung bildet.

2. Verfahren zum Einbringen einer Anzahl Vertiefungen (3) in einen Sitzbezug (2) nach Anspruch 1, **dadurch gekennzeichnet, dass** als Sitzaußenhaut (4) Ledermaterial, Textilstoff, Kunstleder oder Mikrofaser verwendet wird.

3. Verfahren zum Einbringen einer Anzahl Vertiefungen (3) nach Anspruch 1 oder 2, **dadurch gekennzeichnet, dass** die Kaschierung (5) ein textiles Flächengebilde umfasst.

4. Verfahren zum Einbringen einer Anzahl Vertiefungen (3) in einen Sitzbezug (2) nach Anspruch 3, **dadurch gekennzeichnet, dass** die Kaschierung (5) mehrschichtig ausgeführt ist und weiterhin eine geschäumte Polsterschicht umfasst.

5. Verfahren zum Einbringen einer Anzahl Vertiefungen (3) in einen Sitzbezug (2) nach einem der vorangehenden Ansprüche, wobei die Anzahl von Vertiefungen (3) linienförmig, wellenförmig, zickzackförmig ausgeführt sind und ein dreidimensionales Muster ausbilden.

## Claims

1. Method for introducing number of recesses (3) into a seat cover (2) for a motor vehicle seat, comprising the following steps:
- supplying a seat cover (2) made from an at least two-layered composite material which comprises a seat outer skin (4) with a surface region (4a) on a visible side and a lining (5) with a rear-side surface region (5a),
- supplying a blind-stitch/backstitch sewing machine with a sewing thread (12) and a curved blind-stitch needle (14) for producing a blind-stitch seam (20),
- producing a blind-stitch seam (20), wherein the curved blind-stitch needle (14) does not penetrate the seat outer skin (4) during the sewing operation, and the sewing thread (12) is guided through the lining (5) by means of the blind-stitch needle (14) in such a manner that, during the sewing, the sewing thread (12) enters the rear-side surface region (5a) at an inwards passage (15) and exits therefrom at a horizontally spaced-apart outwards passage (16),
**characterized**
- **in that** between the inwards passage (15) and outwards passage (16) a curved thread course (17) is produced lying between them, and in that the stitch depth, the stitch length and the thread tension of the blind-stitch sewing machine are set in such a manner that, when the blind-stitch seam (20) is produced, the inwards passage (15) and the outwards passage (16) are pulled together onto a common region (B) and the material region (21) of the lining (5) that is located between the inwards and outwards passages of the thread course (17) is thereby compressed, as a result of which a recess is formed on that surface region (4a) of the seat outer skin (4) which lies opposite the region (B).

2. Method for introducing a number of recesses (3) into a seat cover (2) according to Claim 1, **characterized in that** leather material, textile material, synthetic leather or microfibre is used as the seat outer skin (4).

3. Method for introducing a number of recesses (3) according to Claim 1 or 2, **characterized in that** the lining (5) comprises a textile fabric.

4. Method for introducing a number of recesses (3) into a seat cover (2) according to Claim 3, **characterized in that** the lining (5) is formed in multiple layers and furthermore comprises a foamed padding layer.

5. Method for introducing a number of recesses (3) into a seat cover (2) according to one of the preceding claims, wherein the number of recesses (3) are designed to be linear, undulating or zigzag-shaped in form and form a three-dimensional pattern.

## Revendications

1. Procédé de réalisation d'un certain nombre de cavités (3) dans une housse (2) pour un siège de véhicule automobile, avec les étapes suivantes :
- la fourniture d'une house (2) en un matériau composite à au moins deux couches, qui comprend une peau extérieure de siège (4) avec une zone de surface (4a) sur un côté visible et un doublage (5) avec une zone de surface (5a) du côté arrière,
- la fourniture d'une machine à coudre à point invisible-point droit avec un fil de couture (12) et une aiguille à point invisible courbe (14) pour réaliser une couture à point invisible (20),
- la production d'une couture à point invisible (20), l'aiguille à point invisible courbe (14) ne traversant pas la peau extérieure de siège (4) lors de l'opération de couture et le fil de couture (12) étant guidé au moyen de l'aiguille à point invisible (14) à travers le doublage (5) de telle sorte que, lors de la couture, le fil de couture (12) entre au niveau d'une piqûre d'entrée (15) dans la zone de surface (5a) du côté arrière et sort au niveau d'une piqûre de sortie (16) agencée à distance horizontalement,
**caractérisé en ce que**
- entre la piqûre d'entrée (15) et la piqûre de sortie (16) est produit un trajet de fil (17) incurvé intermédiaire, et **en ce que** la profondeur de piqûre, la longueur de piqûre et la tension de fil de la machine à coudre à point invisible sont réglées de telle sorte que, lors de la production de la couture à point invisible (20), la piqûre d'entrée (15) et la piqûre de sortie (16) sont resserrées sur une zone commune B et la zone de matériau (21) du doublage (5) qui se trouve entre la piqûre d'entrée et la piqûre de sortie du trajet de fil (17) est ainsi comprimée, moyennant quoi une cavité se forme sur la zone de surface (4a) de la peau extérieure de siège (4) qui se trouve en face de la zone B.

2. Procédé de réalisation d'un certain nombre de cavités (3) dans une housse (2) selon la revendication 1, **caractérisé en ce qu'**un matériau en cuir, une matière textile, un cuir synthétique ou des microfibres sont utilisés en tant que peau extérieure de siège (4).

3. Procédé de réalisation d'un certain nombre de cavités (3) selon la revendication 1 ou 2, **caractérisé en ce que** le doublage (5) comprend une structure textile plate.

4. Procédé de réalisation d'un certain nombre de cavités (3) dans une housse (2) selon la revendication 3, **caractérisé en ce que** le doublage (5) est réalisé à plusieurs couches et comprend en outre une couche de rembourrage en mousse.

5. Procédé de réalisation d'un certain nombre de cavités (3) dans une housse (2) selon l'une quelconque des revendications précédentes, dans lequel le nombre de cavités (3) sont réalisées sous forme linéaire, sous forme ondulée, en forme de zigzag et forment un motif tridimensionnel.
